(19) Europäisches Patentamt / European Patent Office / Office européen des brevets

(11) **EP 3 258 639 A1**

(12) **EUROPEAN PATENT APPLICATION**

(43) Date of publication:
**20.12.2017 Bulletin 2017/51**

(51) Int Cl.:
***H04L 9/00*** *(2006.01)*

(21) Application number: **16305719.3**

(22) Date of filing: **14.06.2016**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(71) Applicant: **GEMALTO SA**<br>**92190 Meudon (FR)** | (72) Inventor: **ALCASABAS, Juan Manolo**<br>**92190 Meudon (FR)**<br><br>(74) Representative: **Lotaut, Yacine Diaw**<br>**Gemalto SA**<br>**Intellectual Property Department**<br>**6, rue de la Verrerie**<br>**92190 Meudon (FR)** |

(54) **CRYPTOGRAPHY APPARATUS PROTECTED AGAINST SIDE-CHANNEL ATTACK USING CONSTANT HAMMING WEIGHT SUBSTITUTION-BOX**

(57)    A method and a system for operating a cryptography device, having a processor and memory, to perform a cryptography operation resistant to side-channel attack by using two Hamming-weight-neutral substitution boxes in lieu of one standard substitution box to obtain a first and second substitution output from a byte of an encryption state wherein each substitution in the first and the second Hamming-weight-neutral substitution box has an equal Hamming weight and each corresponds to opposite nibbles of the corresponding substitution in the standard substitution box. Other systems and methods are disclosed.

Fig. 11

**Description**

**BACKGROUND OF THE INVENTION**

The present invention relates generally to electronic cryptography technology, and in particular to a mechanism for protecting a cryptography device against side-channel attacks by performing a block cipher using a constant Hamming weight substitution-box.

Electronic communication and commerce can be powerful yet dangerous tools. With the wide-spread availability of network technology, such as the Internet, there is an ever increasing use of online tools for communication and commerce. Every year more users find it easier or quicker to conduct important transactions, whether in the form of correspondence or commerce, using computers and computer networks. However, there is always the risk that the security of electronic transactions is compromised through interception by third parties who do not have the right to partake in the transactions. When malicious third parties obtain access to otherwise private transactions and data there is risk of economic loss, privacy loss, and even loss of physical safety. Cryptography is one mechanism employed to avoid intrusion into the privacy of electronic transactions and data.

Cryptography is a technology for hiding a message in the presence of third parties using mathematical techniques in which a message is encrypted in such a way that it can only be decrypted using a secret key that should only be known by the recipient and/or sender of a message.

Cryptographic algorithms have inputs and outputs. In the case of encryption, the input is a message that is to be protected in *plaintext.* The plaintext message is manipulated by the cryptographic algorithm to produce a *ciphertext*, the output. To produce the ciphertext the cryptographic algorithm performs certain mathematical operations that include the use of a secret key. The key may be a shared secret, e.g., between a sender and recipient, or may be a private key held by the recipient.

Traditionally, both the sender and recipient of an encoded cryptographic message were considered secure. Cryptography's primary use is to transmit an encoded message from the sender to the recipient without fear that an intermediary will be able to decode the message. If an attacker has no access to the sender's or recipient's cryptography devices, the attacker is limited to using the encoded message itself, or possibly an encoded message and a corresponding plaintext message, to discern the cryptographic key used to encode or decode the message. However, if the attacker gains access to the cryptographic device, the picture changes dramatically.

One mechanism of ensuring that a private key is indeed kept private is to store the private key and any related key material on a secure portable device, e.g., a smart card or a mobile device. A smart card is a small tamper-resistant computer often in the form of a credit card sized and shaped package. Smart cards may be used to store cryptographic keys and cryptography engines for performing encryption, decryption, and digital signatures.

In one example, a user may receive an encrypted message and use his smart card to decrypt the message by first authenticating to the smart card and then passing the message to the smart card for decryption. If authentication is successful, the smart card may use a cryptographic key stored on the card, and a corresponding cryptography engine, to decrypt the message and provide the decrypted message to the user. Similarly, if a user wishes to cryptographically sign a message, the user may pass the message to the user's smart card, which uses a cryptographic key of the user to digitally sign the message and to provide the signature back to the user or to a third party recipient.

If an attacker has access to the smart card, the attacker may make repeated observations of the execution of the cryptographic algorithms, which may allow the attacker to discern the secret cryptographic keys stored on the smart card. One such attack is the so-called *side-channel attack.*

*Side-channel attacks* make use of the program timing, power consumption and/or the electronic emanation of a device that performs a cryptographic computation. The behavior of the device (timing, power consumption and electronic emanation) varies and depends directly on the program and on the data manipulated in the cryptographic algorithm. An attacker could take advantage of these variations to infer sensitive data leading to the recovery of a private key.

One frequently used cryptographic technique is the *substitution box*, also known as *S-box.* The S-box technique involves the non-linear substitution of a particular set of bits for another set of bits through the use of a two-dimensional lookup table. For example, the Rijndael family of block ciphers, including AES-128 (Advanced Encryption Standard with 128-bit key), operates on an internal 4x4 matrix of 8-bit bytes, the *state* matrix (hereinafter the *Rijndael state*). During encryption and decryption of a plaintext, a sequence of *rounds* are executed; during each round, each byte of the *state* is replaced with a corresponding byte from the Rijndael S-box.

It has been found that the S-box step is vulnerable to side-channel attacks. Side-channel attacks rely on sensitive data, for example, the S-box output, appearing on memory cells and registers of a cryptographic device. The connection between 1) power consumption of the cryptographic device, 2) Hamming weight of data manipulated inside the cryptographic device, and 3) the manner in which known inputs interact with secret data is exploited. Statistical tools are used to determine the value of secret data by analyzing how power consumption changes when known inputs are changed.

As Rijndael ciphers include multiple rounds, there are multiple S-box operations. The first S-box operation is particularly vulnerable to a side-channel attack if the S-box input contains a straightforward interaction between a known input and secret keys, thus being relatively simple to analyze. The second S-box is also vulnerable. However, analysis of the second S-box operation requires a successful attack on the first S-box to get intermediate data, which may be used in the analysis.

Side-channel attack against the Rijndael family of ciphers is a well-studied subject and many countermeasures exist. Typically such countermeasures involve masking of the cryptographic operation. Some examples are techniques described in [Akkar] Mehdi-Laurent Akkar and Christophe Giraud. An Implementation of DES and AES, Secure against Some Attacks. In Cetin Kaya Koc, David Naccache, and Christof Paar, editors, Cryptographic Hardware and Embedded Systems - CHES 2001, volume 2162 of Lecture Notes in Computer Science, pages 309-318. Springer, 2001; [Golic] Jovan D. Golic and Christophe Tymen. Multiplicative Masking and Power Analysis of AES. In Burton S. Kaliski Jr., Cetin Kaya Koc, and Christof Paar, editors, Cryptographic Hardware and Embedded Systems - CHES 2002, volume 2535 of Lecture Notes in Computer Science, pages 198-212. Springer, 2003. Elisabeth Oswald, Stefan Mangard, and Norbert Pramstaller. Secure and Efficient Masking of AES - A Mission Impossible, Cryptology ePrint Archive (http://epunt.iacr.org/), Report 2004/134, 2004. These solutions require significant RAM to create a randomized S-Box derived from the standard S-box.

Thus, while there are existing solutions to protect against side-channel attacks, many of these techniques require significant RAM.

The MILENAGE algorithm set, which is used to provide security features in the context of UMTS (Universal Mobile Telecommunication System, is built on the Rijndael block cipher ([MILENAGE] 3GPP TS 35.205, v13.0.0 (2016-01): Specification of the MILENAGE Algorithm Set: An example algorithm set for the 3GPP authentication and key generation functions f1,f1*, f2, f3, f4, f5, and f5*). Being a Rijndael block cipher, MILENAGE includes S-box substitutions, and is therefore prone to side-channel attacks mounted against the S-box substitutions.

MILENAGE is typically deployed on SIM (Subscriber Identity Module) cards, also known as UICC cards. These cards are often quite resource constrained, for example, having a RAM of 128K bytes or less. Because of these resource constraints, countermeasures that require a significant amount of RAM are not possible.

As it is desirable to perform cryptography operations efficiently and securely on resource constrained devices, such as SIM cards, it is desirable to provide a countermeasure against side-channel attacks that does not require large use of RAM.

From the foregoing it will be apparent that there is still a need for an improved technology to provide a secure cryptography mechanism that is computationally efficient, does not require excessively large RAM or other storage, and with which a portable security device - e.g., a SIM card connected to a mobile communications device - can provide the capability of providing cryptographic services that are protected from side channel attacks.

**BRIEF DESCRIPTION OF THE DRAWINGS**

Figure 1 is a schematic illustration of a host computer with a portable security device, e.g., a smart card, connected thereto for performing cryptographic services through connection over a network to one or more servers.

Figure 2 is a schematic illustration of a cryptography device.

Figure 3 is a schematic illustration of programs stored in a memory of the cryptography device of Figure 2.

Figure 4 is a schematic illustration of a cryptography module program listing that may be stored in the memory of a portable security device as illustrated in Figure 3 and which performs a cryptographic operation including a round function.

Figure 5 a schematic illustration illustrating the use of AES-128 encryption in the MILENAGE algorithm.

Figure 6 a standard AES-128 substitution box.

Figure 7 is a flow-chart illustrating the computation of two Hamming-weight neutral S-boxes from a standard S-box.

Figure 8 is a pseudocode listing of cryptographic operation using substitution boxes.

Figures 9 is an illustration of two Hamming-weight neutral S-boxes corresponding to the standard substitution box of Figure 6.

Figures 10 and 11 are logic diagrams illustrating the performance of a round function using the Hamming-weight neutral S-boxes of Figure 9.

## DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

In an embodiment of the invention, a technology is provided that increases the computational efficiency of cryptographic apparatuses that perform block cipher cryptography by improving the utilization of the processing resources of the cryptography apparatus. Furthermore, the provided technology efficiently reduces the risk of differential power analysis attacks.

Smart cards are plastic cards with an embedded microprocessor and a secure storage. They are portable, secure, and tamper-resistant. Smart cards provide security services in many domains including telecommunication, banking, commerce, and citizen identity. Smart cards can take different forms, such as credit card shaped cards with electrical connectors to connect the smart card to a smart card reader, USB tokens with embedded smart cards, and SIM cards for use in mobile telephones and tablet devices. Smart cards are used herein as examples of portable security devices that may be used in implementations of the technology described herein. Other examples of portable security devices include smart memory cards, flash memory, etc. In a preferred embodiment, the portable security device has a processor, a memory for storing programs and data, and some security features to make the device relatively tamper-proof. Smart cards are used herein as examples of such devices.

While the mechanism for performing a cryptographic calculation described herein may be used advantageously in smart cards and other portable security tokens used for performing cryptographic calculations, the same mechanisms may also be used with other cryptographic processors. Thus, smart cards are used herein for illustrative purposes only.

Digital signature and other cryptography are examples of functions that smart cards provide. The smart card stores private or shared secret keys in its secure storage and performs cryptographic operations to generate a digital signature for a given input or to decrypt a given input. A smart card works with a host device, such as a personal computer (PC), cell phone, tablet device or banking terminal. A PC application, such as an email client or a web browser, typically works with a smart card to sign, encrypt, or decrypt a document. The cryptographic operation may be part of a challenge-response mechanism for user authentication. The PC application and the smart card interact through some cryptographic API called middleware, which is designed to communicate with the smart card. In this scenario, the smart card provides services locally to the PC.

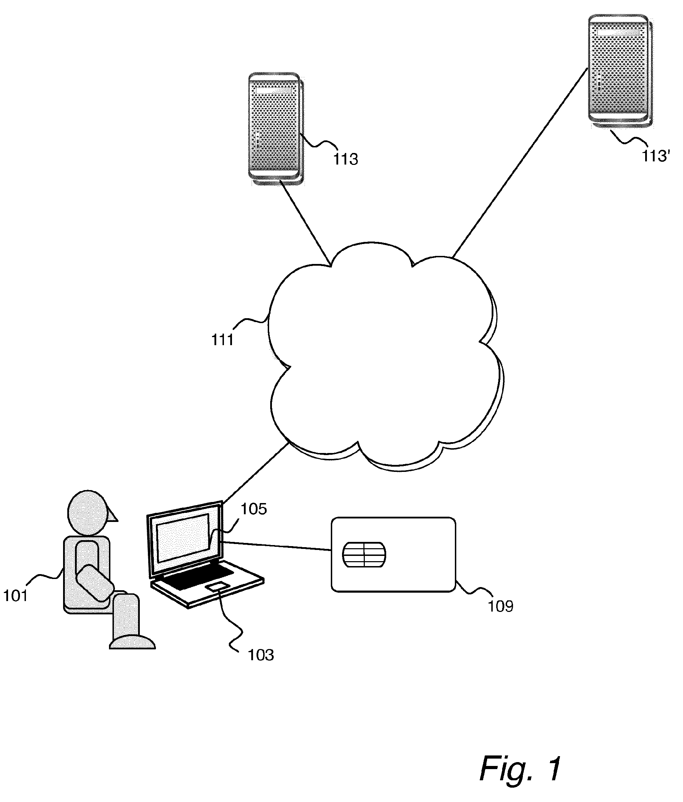

Figure 1 is a schematic illustration of a network 111 connecting a host computer 103 with a portable security device 109, e.g., a smart card, connected thereto, to one or more remote servers 113. The host computer 103 is operated by a user 101 who interacts with one of the servers 113 via a web browser window 105 of a web browser. In the example scenario illustrated in Figure 1, the smart card 109 provides the cryptographic operations on behalf of the user 101, e.g., to cryptographically sign documents, to decrypt messages received from the relying party 113, or to perform a cryptographic operation as part of a challenge-response authentication mechanism.

While Figure 1 provides an illustration of a scenario in which cryptography may play an important role, there are many other important uses for cryptography. Thus, the technology described herein is not limited in its application to the usage example illustrated in Figure 1.

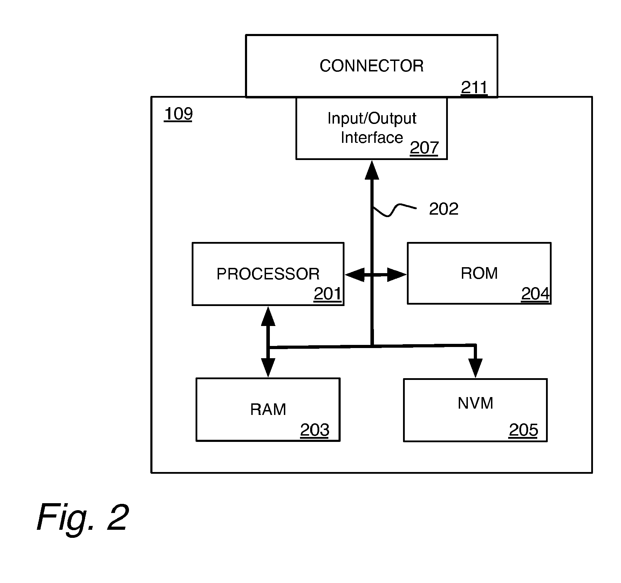

Figure 2 is a schematic illustration of a portable security device 109, for example, a smart card. The portable security device 109 may include a processor 201 connected via a bus 202 to a random access memory (RAM) 203, a read-only memory (ROM) 204, and a non-volatile memory (NVM) 205. The portable security device 109 further includes an input/output interface 207 for connecting the processor 201, again typically via the bus 202, to a connector 211 by which the portable security device 109 may be connected to the host computer 103.

In alternative embodiments, the connection between the host computer 103 and the portable security device 109 is wireless, for example, using near-field communication (NFC) or other radio or microwave communication technologies.

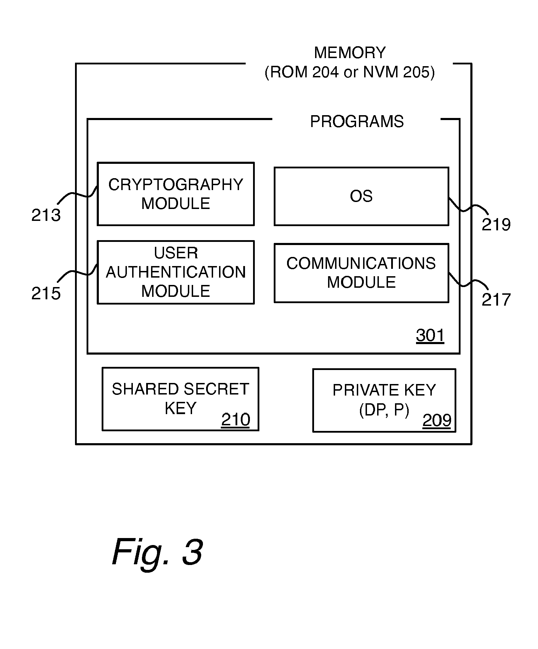

The ROM 204 and/or NVM 205 may include computer programs 301 as is illustrated in Figure 3. While it is here depicted that the computer programs 301 are all co-located in the ROM 204 or the NVM 205, in actual practice there is no such restriction as programs may be spread out over multiple memories and even temporarily installed in RAM 203. Furthermore, the portable security device 109 itself may include multiple ROMs or NVMs. The programs 301 include operating system programs as well as application programs loaded onto the portable security device 109. The ROM 204 or NVM 205 may also contain private data, such as a private key 209 or a shared secret key 210, stored either in its basic form or in derived quantities.

The portable security device 109 programs 301 may include a cryptography module 213, a user authentication module 215, a communications module 217, and the operating system OS 219.

Thus, the portable security device 109 may receive a document or message via the connector 211. The processor 201, by executing instructions of the cryptography module 213, may digitally sign the document/message or may decrypt the document/message using the private key 209 or shared secret key 210. Using functionality provided through the communications module 217, the processor 201 may receive and transmit communications with the host computer 103.

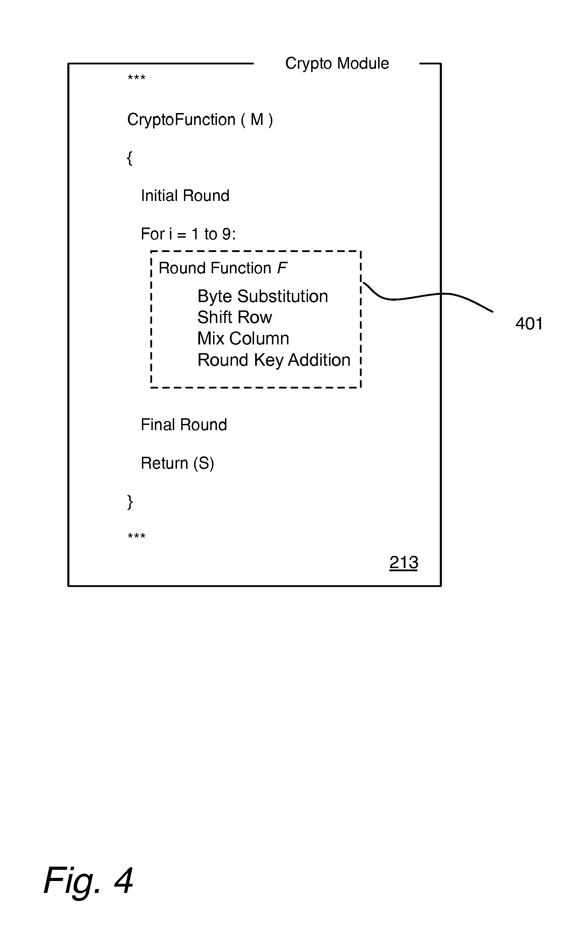

Figure 4 is a schematic illustration of a portion of an implementation of the cryptography module 213. The cryptography module 213, which may, for example, be an implementation of the MILENAGE algorithm, would contain one or more functions, methods, or routines. One possible function could be, as is illustrated in Figure 4, a function called *CryptoFunction( )* which in this case, for illustrative purposes, takes the argument *M* as the message to encrypt. In the cryptography module 213 the encryption output is, for example, computed using the MILENAGE algorithm, which is closely related to the Advanced Encryption Standard (AES), specifically AES-128.

MILENAGE and the AES-128 algorithm is described in detail in [MILENAGE] 3GPP TS 35.305 v13.00 (2016-01); Third Generation Partnership Project; Technical Specification Group Services and Aspects; 3G Security; Specification of the MILENAGE Algorithm Set: An example algorithm set for the 3GPP authentication and key generation functions f1, f1*, f2, f3, f4, f5 and f5*; Document 2: Algorithm specification (Release 13) (http://www.etsi.org/deliver/etsi_ts/135200_135299/135206/13.00.00_60/ts_135206v 130000p.pdf, accessed on May 15, 2016), incorporated herein by reference in its entirety.

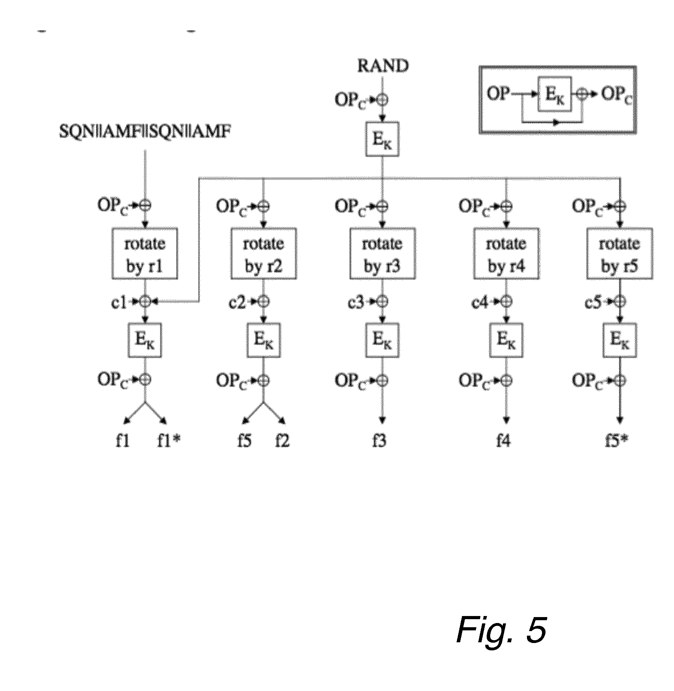

In a reference implementation of MILENAGE given in [MILENAGE], Annex 1: Figure of the Algorithms (reproduced as Figure 5, herein), each $E_k$ is the result of applying the Rijndael encryption algorithm (e.g., AES-128).

The AES-128 algorithm operates on four-by-four byte blocks (i.e., 128 bytes: other AES varieties have different block lengths, e.g., 192 and 256). A message to be encrypted (or decrypted) is divided into such 128-bit plaintext blocks, the key used to encrypt (or decrypt) these blocks is 128 bits, the intermediate result (referred to as the *state*) are 128 bits, and the outputs are 128-bit blocks. While these 128 bit blocks are commonly viewed as 4x4 matrices, herein we consider them as 16-byte strings or vectors.

Returning to Figure 4, the AES-128 algorithm consists of a series of 11 rounds:

- an initial round with a *Round Key Addition* operation,

- 9 rounds (illustrated in Figure 4 as *Round Function F* 401), indexed 1 through 9, each performing:

    a byte substitution transformation, *S-box*

    a *shift row* transformation

    a *mix column* transformation

    a *Round Key addition*

- a final round (round 10) performing

    a byte substitution transformation, *S-box*

    a *shift rows* transformation

    a *Round Key addition*

A complete discussion of AES-128 is outside the scope of this document]; only a few aspects of the algorithm are discussed here. Further details about AES-128 may be found in [MILENAGE], referenced above..

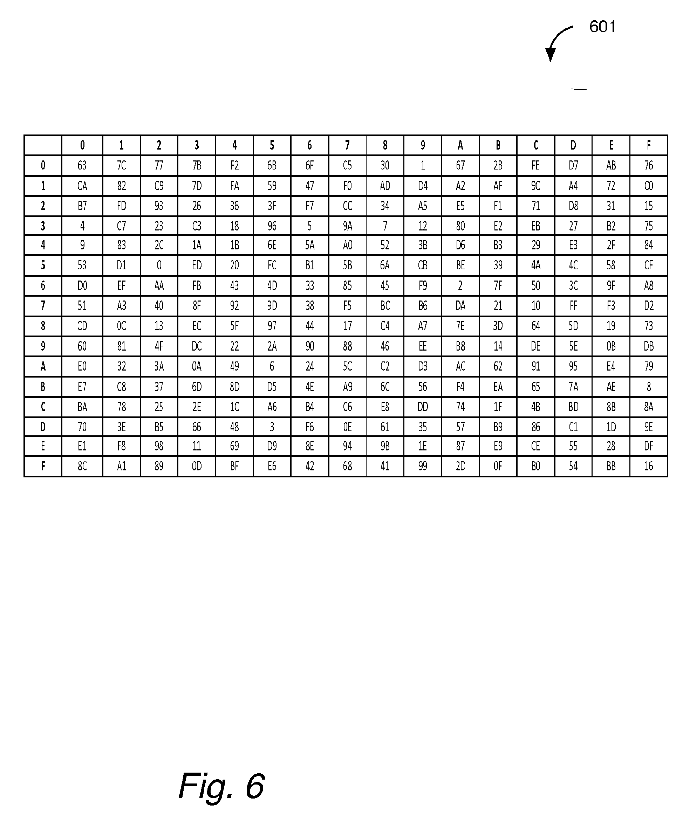

The byte substitution transformation, S-box, is performed by performing a linear transformation of each *state* byte independently using a substitution table (S-box) as illustrated in Figure 6, such that for every element in *state:*

$$b_i = S\text{-}box\,[a_i]$$

where $a_i$ is the initial value of the element in *state* and $b_i$ is the output value. Each S-box entry corresponds to the values of a possible statebyte value, $a_i$, indexed by the least significant nibble (column) and the most significant nibble (row) of the statebyte value, e.g., if the statebyte value is 7B, the new value for that statebyte becomes 21.

The *shift rows* transformation is best understood by considering the *state* as a 4x4 matrix. Each row is cyclically shifted to the left by a different amount. The *shift rows* transformation is described in detail in [MILENAGE].

The *mix columns* transformation operates on each column of the state independently. The *mix columns* transformation is described in detail in [MILENAGE].

In practice, in a MILENAGE implementation of AES-128 the following pseudocode would appear in an implementation:

Table 1: Pseudocode for MILENAGE implementation using a Conventional AES-128 Round 1.

```
1          for (i=0; i<16; i++)
2              AES_STATE[i] = Milenage_Rand[i] XOR Milenage_OPC[i]
3
4          for (i=0; i<16; i++)
5              AES_STATE[i] = SBOX[AES_STATE[i]];
6
7          call SHIFT_ROW(AES_STATE);
8
9          call MIX_COLUMN(AES_STATE);
```

Please note that this is not complete MILENAGE or AES-128 pseudocode; rather, the statements in Table 1 above are representative of code that would be implemented in a MILENAGE implementation using AES-128 for the encryption function E). This process is referred to herein as the *Conventional MILENAGE AES-128 Process (S-box -> Shift Rows -> Mix Column)* (or, simply, *Conventional AES Process*).

Statement 1 of Table 1 produces an initial state for a MILENAGE process. In Rounds 2 through 10, Step 1 and 2 are not used as the AES_STATE for Rounds 2 through 10 is simply the AES_STATE from the preceding round.

The for-loop 2 corresponds to the round function of AES-128. The AES_STATE [i] = SBOX[AES_STATE[i]]; statement is the byte substitution transformation. The Hamming weight of the output, revised AES_STATE[i], has a dependence on the Hamming weight of Milenage_Rand[i]XORMilenage_OPC[i]. This dependence can be exploited to gain insight on Milenage_OPC[i]. Since Milenage_OPC can be set by individual operators, the situation provides a mechanism by which an attacker could differentiate the algorithms of different operators. As operators may consider their OPC values secret, Milenage_OPCis a value important to the secrecy of the MILENAGE algorithm implementations.

The call SHIFT_ROW(AES_STATE); statement rearranges bytes of AES_STATE in a predictable way. Each byte from AES_STATE remains intact after the SHIFT_ROW function. Therefore, just as with the byte substitution transformation, the Hamming weight leakage during rearrangement of the intact bytes also presents the risk of exposing the value Mileange_OPC.

In the call MIX_COLUMN (AES_STATE) ; function the bytes of AES_STATE are mixed with each other. No byte remains intact. There is nevertheless a risk to Milenage_OPC while the intact bytes are being manipulated before mixing. But after the MIX_COLUMN function, when all bytes are no longer intact, it becomes more difficult to find the relationship between the new AES_STATE and Milenage_OPC.

Furthermore, in an actual implementation, there is also an ADD_ROUND_KEY step after the MIX_COLUMN step 9. However, the ADD_ROUND_KEY step is not prone to side-channel leakage due to varying Hamming weights in the S-box substitution and the method described herein to avoid such side-channel leakage does not involve the ADD_ROUND_KEY step.

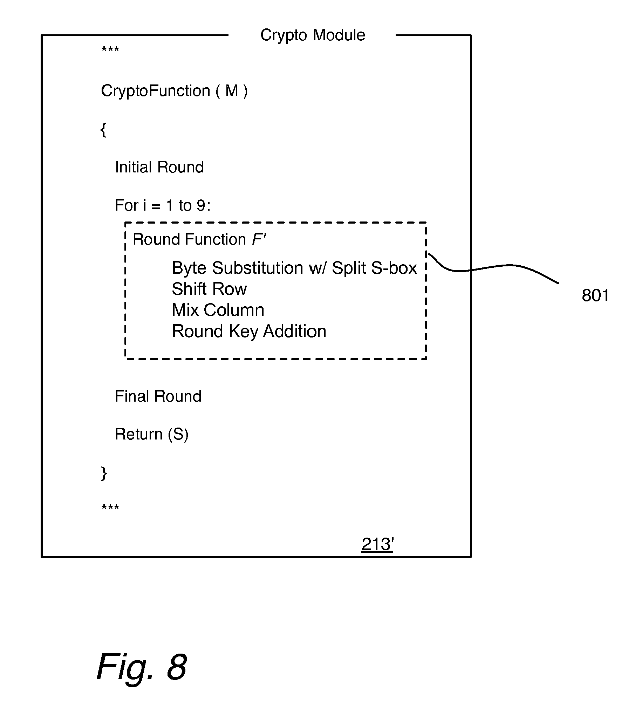

The above-identified risks to the Milenage_OPC value arise from the variation in Hamming weight in the S-box table. In a preferred embodiment, depicted at a high-level as a modified cryptomodule 213' in Figure 8, those risks are avoided by a modified *Round Function F'* 801, which performs the byte substitution transformation using a split S-box table, i.e., split into two tables such that every table entry has the same designated Hamming weight, for example, four.

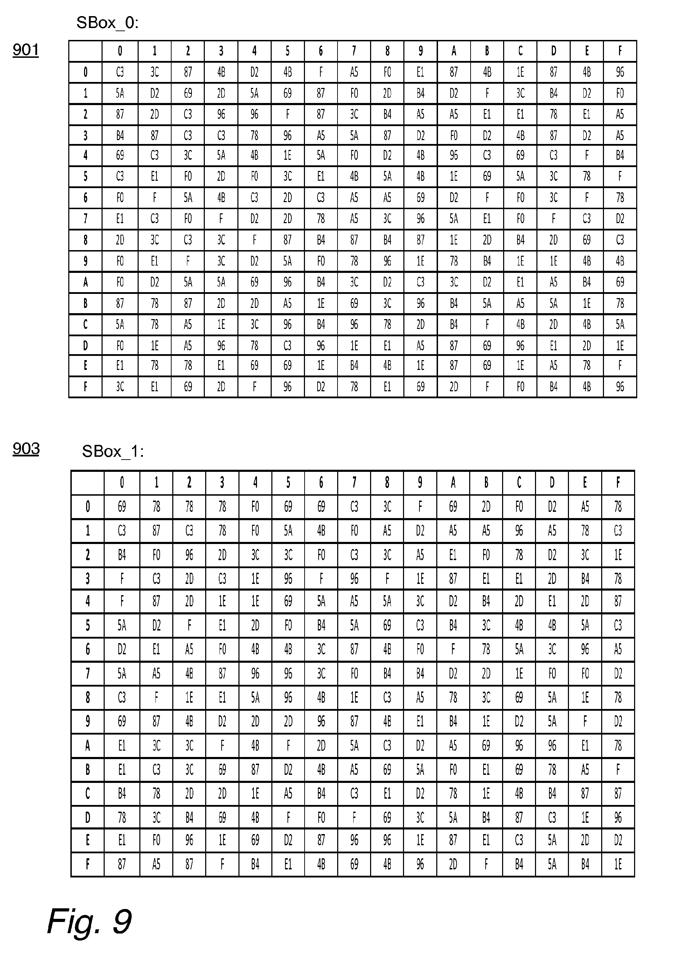

On Figure 9, the first of the two tables, Sbox_0 901 corresponds to the lower nibble of the conventional S-box. The lower nibble is the same as in the conventional S-box. The higher nibble is set such that the Hamming weight for the entry equals the constant designated Hamming weight for the S-box, e.g., four. For example, consider the entry for 7A. In the conventional S-Box 601 (Fig. 6), the value is DA, i.e., 1101 1001. The Hamming weight for the lower nibble is 2. Therefore, in S-box_0 (Figure 9), the higher nibble is set to 5, such that the combined value, 5A (0101 1001), has a Hamming weight of 4. Of course, the higher nibble may be set to any value that has a Hamming weight of 2, e.g., 3, 5, 9, or A.

Again to Figure 9, the second table of the split S-box, Sbox_1 903, is constructed similarly to the construction of Sbox-0. However, Sbox_1 901 corresponds to the higher nibble from the conventional S-Box and the lower nibble is reset to a value which would bring the combined Hamming weight to the designated constant Hamming weight for all entries, e.g. the weight of four, used above. Consider, for example, the entry for D0. In the conventional S-Box (Figure 6), the value is 70. The higher order nibble, 7, has a Hamming weight of 3. Therefore, Sbox_1, the lower order nibble is set to an exemplary value 8 which has a Hamming weight of 1 so that the combined Hamming weight becomes 4.

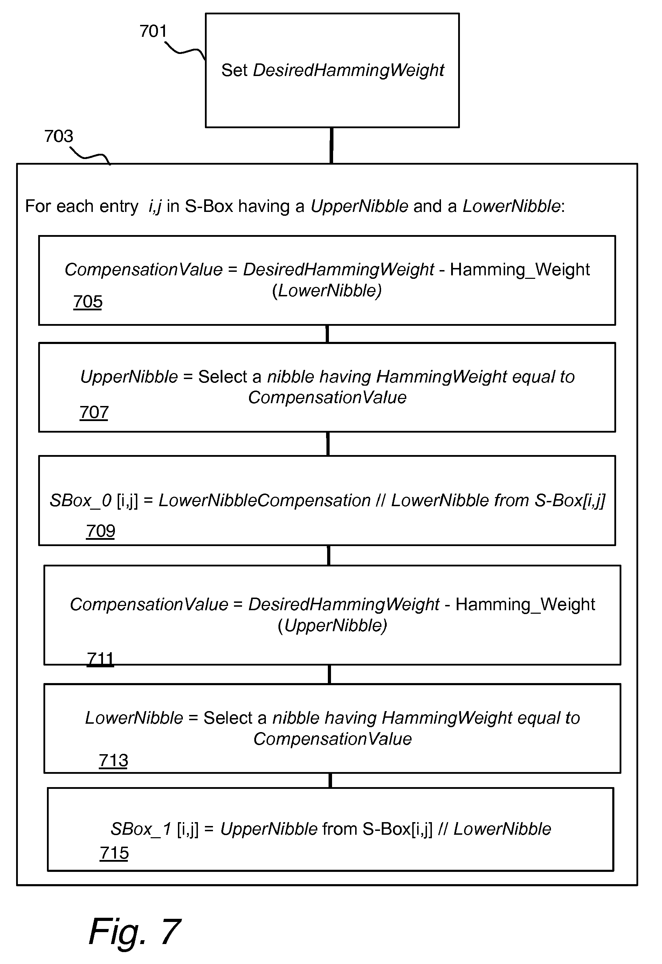

Figure 7 is a flow-chart illustrating one mechanism for splitting a standard S-box 601 into the two Hamming-weight neutral S-boxes 901 and 903.

Step 701: A desired Hamming weight is selected, for example, four. In a cipher that is based on bytes, four is the only value that works for all possible nibble values. However, in alternative embodiments the desired Hamming weight may be a different value depending on whether the cipher is byte-based and whether all possible values are used.

Loop 703: For each entry *i,j* in the standard S-box 601, entries in the Hamming-weight neutral S-boxes 901 and 903 are determined.

Step 705: a CompensationValue is determined for the lower nibble by subtracting the Hamming weight of the lower nibble from the desired Hamming weight.

Step 707: The CompensationValue is used to select an UpperNibble having the Hamming weight equal to the CompensationValue.

Step 709: SBox_0[i,j] is set to the "concatenation" of the UpperNibble and the lower nibble from the standard S-box[i,j] entry, where "concatenation" here means concatenating the UpperNibble selected in Step 707 with the lower nibble from the standard S-Box to form one byte.

Steps 711-715: performs the analogous operations for the high-order nibble in the standard S-box[i,j] entry.

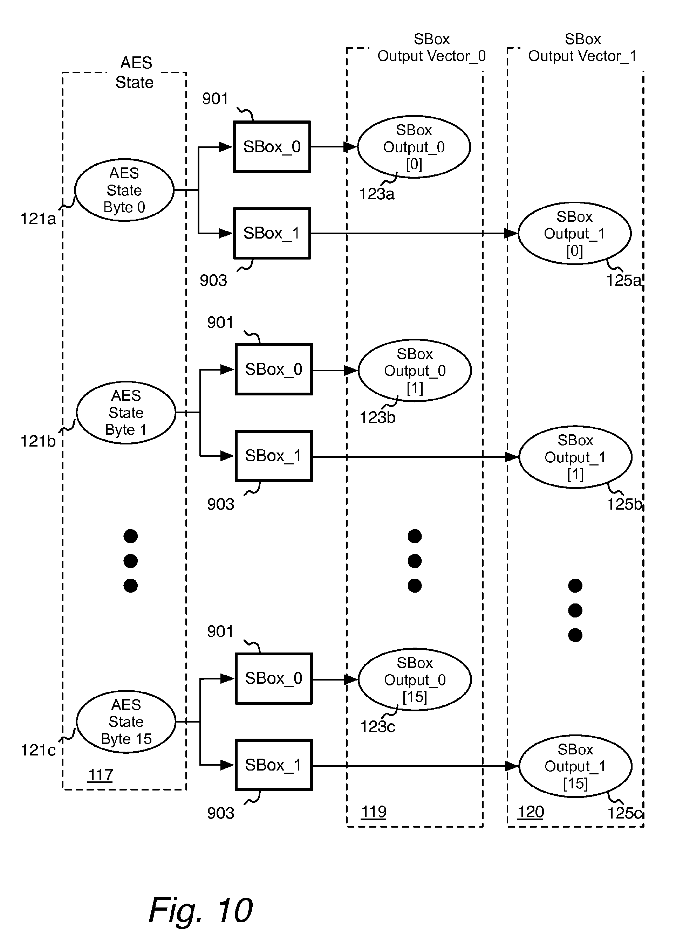

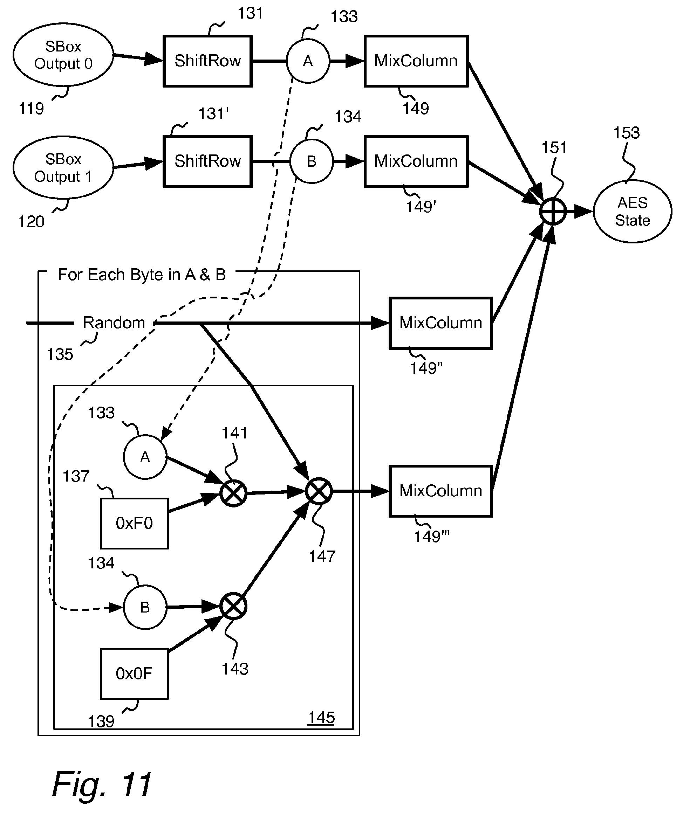

The use of the split S-boxes to process an AES-state is illustrated in logic flow diagrams of Figures 10 and 11, and described in conjunction with the pseudocode of Table 2, below. For an AES-state vector 117, consisting of sixteen bytes 121a-c, the byte substitution transformation is processed by applying the split S-boxes 901 and 903 to each AES-state vector byte 121, thereby producing two output vectors 119 and 120, each consisting of 16 output bytes 123 and 125, respectively. The AES-state vector 117 and the output vectors are indexed 0 through 15.

Ultimately the output from the modified Round Function F' 801 outputs the same result as the standard Round Function F 401. A process illustrated in Figure 11 and described in the pseudocode below accomplishes that result.

The following pseudocode (referred to herein as the *Modified MILENAGE AES-128 Process* (or, simply, *the Modified Process):*

Table 2. Pseudo code for Hamming-weight-neutral AES-128 Process

/*First the initial AES_State as in the Conventional AES-128 process is input into the split_Sboxes 901 and 903, as illustrated in Figure 11 producing S-box_outputs 0 and 1, 119 and 120*/

```
1    for (i=0; i<16; i++)
2        AES_STATE[i] = Milenage_Rand[i] XOR Milenage_OPC[i]
3    for (i=0; i<16; i++)
4        AES_STATE[0][i] = S-BOX_0[AES_STATE[i]];
5    for (i=0; i<16; i++)
6        AES_STATE[1][i] = S-BOX_1[AES_STATE[i]];
```

/*At this point AES_SIATE[0] AND [1] have gone through the byte substitution of the split Sboxes producing the S-box outputs 119 and 120, respectively*/

/*Next the S-box outputs are processed with the Shift_Row process 131, respectively, producing intermediate state vectors A and B, 133 and 134*/

```
7    call SHIFT_ROW(AES_STATE[0]);
8    call SHIFT_ROW(AES_STATE[1]);
```

(continued)

/*At this point AES_STATE[0] AND [1] have gone through the Shift-Row process and are transformed into a Hamming weight neutral form. However, the output from each round calculation is made to conform to the

corresponding round in the Conventional AES process. That result is achieved by the following code. Additionally, to protect this portion of the calculation from side-channel leakage and associated attacks, a random number is introduced into the calculation.


/*An "extra" buffer (Extra_Buffer[0]) is used to introduce a random number 135 into the input for mix_ column calculation. The random is on a per-byte basis. Thus, the Random 135 is set for each byte in the extra buffer vector.*/

```
call MIX_COLUMN((AES_STATE[0]));
call MIX_COLUMN((AES_STATE[1]));

for (i=0; i<16; i++)
    Extra_Buffer[0][i] = Random Number
```

/*A second "extra" buffer (Extra_Buffer[1] is used to combine, on a byte-for-byte basis, the intermediate state vectors 133 and 134 with masks masking out the irrelevant portions of each of the intermediate state vectors.

Ultimately the bytes of the second extra buffer 145 is a combination of the random value 135 and the intermediate state vectors 133 and 134 on a byte-by-byte basis. Specifically the upper half-byte of intermediate state vector A 133 is masked (XOR operation 141) with the quantity OxF0 137 and lower half-byte of intermediate state vector B 134 is masked (XOR operation 143) with the quantity 0x0F 139. These quantities 141 and 143 are then XORed (XOR operation 147).

```
*/
for (i=0; i<16; i++)
{
    Extra_Buffer[1][i] =
        (Extra_Buffer[0][i] XOR
            (AES_STATE[0][i] XOR 0xF0)
        XOR
        (AES_STATE[1][i] XOR 0x0F))
}
```

/*Each of the two intermediate state vectors A and B, 133 and 134, the random vector Extra_Buffer [0] 135, and the combined vector 145 are processed by the MIX_COLUMN operation 149.*/

```
call MIX_COLUMN((Extra_Buffer[0]));
call MIX_COLUMN((Extra_Buffer[1]));
```

/*At this point AES_STATE[0], AES_STATE[1], Extra_Buffer[0] & Extra_Buffer[1] have gone through the Mix_Column process*/


/*The two Extra_Buffer vectors and the two intermediate AES state vectors 133 and 134 are XORed together

(operation 151). The output from the XOR operation 151 is identical in value to the output from the corresponding round operation in the Conventional AES process.*/

```
for (i=0; i<16; i++) {
    OUTPUT[i] =
        AES_STATE[0][i]
        XOR AES_STATE[1][i]
```

(continued)

| 27 | XOR Extra_Buffer[0][i] |
| 28 | XOR Extra_Buffer[1][i] |
| 29 | } |

The OUTPUT vector is numerically identical to the corresponding round output for the conventional AES process.

Steps 1 and 2 of the pseudocode of the Modified AES-128 Process are the same as for the Conventional AES-128 Code, namely, establishing of the initial MILENAGE state. The initial MILENAGE state is illustrated in Figure 10 as AES State 117. For subsequent rounds, as with AES-128, the input AES state 117 is the output (Figure 11, AES state 153) from the previous round. Thus, for the rounds following the first round, Steps 1 and 2 are not necessary and hence not executed.

Steps 3 through 6, of the pseudocode of Table 2 and illustrated in Figure 10, correspond to steps 4-5 in the Conventional AES-128 process. In the case of the Modified AES-128 process, the Byte Substitution step is performed using Hamming-weight neutral S-boxes that have been constructed as described herein above from the standard non-Hamming-weight neutral S-box. The substitutions in the Hamming-weight neutral S-boxes all have the same Hamming weight, for example, just as illustrated in the examples of S-box_0 901 and S-box_1 903 of Figure 9. Thus, in the Modified Process, the Hamming weight of the revised AES_STATE[j][i] has no dependence on Milenage_Rand[i]XORMilenage_OPC[i] because the Hamming weight of all the bytes in AES_STATE[j][i] are the same due to the design of SBox_0 and SBox_1, in which all substitutions have the same Hamming weight.

The output from Steps 3 through 6, thus, are two AES state vectors, namely, AES_STATE[0] 119, from the SBox_0 901, and AES_STATE[1] 120, from the SBox_1 903. Each of AES_ STATE[0] 119 and AES_STATE[1] 120 consist of 16 bytes AES_STATE[0][0..15] (bytes 123 of Figure 10) and AES_STATE[1][0..15] (bytes 125 of Figure 10).

The two split AES_STATES[0] 119 and [1] 120 go through the Shift_Row and Mix_Column operations in parallel and the results are then merged in a manner to arrive at the same result for the round calculation as would be obtained from the Conventional AES-128 process. Figure 11 is logic flow diagram depicting this parallel processing of Shift_Row and Mix_Column operations and the merging of the two split AES_STATES.

Steps 7 and 8 from the pseudocode of Table 2 and the two Shift_Row operations 131 and 131'[1] of the Modified AES-128 Process correspond to Step 7 of the Conventional AES-128 Process. The *shift row* operation 131 rearranges bytes of AES_STATE[0] in a predictable way. Each byte from AES_STATE[0] remains intact after the Shift_Row operation, but each byte's adjusted form now lessens the risk that the Mileange_OPC value can be discerned by an attacker because all bytes of AES_STATE[0] have no variation. This is similarly true for AES_STATE[1]. Other than repeating the *shift_row* operation on both of the split AES_States, AES_STATE[0] 119 and AES_STATE[1] 120, the Shift_Row operation is the same as in the Conventional AES-128 Process.

[1] Herein, the notation x' etc. is used to refer to a specific operation, e.g., SHIFT_ROW, applied to different inputs, e.g., AES_STATE[0] and AES_STATE[1], respectively.

Steps 9 and 10, the two MIX_Column operations 149 and 149', in the Modified AES-128 Process correspond to Step 9 of the Conventional AES-128 Process. As with the Shift_Row operation, the MIX_Column operation 149 is the same as in the Conventional AES-128 Process other than that it is performed on both of the split AES_States, AES_STATE[0] 133 and AES_STATE[1] 134 output from the split Shift_Row operation 131 and 131'.

At this stage, the split AES_States, AES_STATE[0] and AES_STATE[1], are combined to create the correct output AES state that has the same values as the AES state output from the Conventional AES Process would have.

One way to "go back" to obtain the same output as the standard is to perform the following operation:

```
Corrected_Output = MixColumn(AES_STATE[0][i]) XOR

    MixColumn(AES_STATE[1][i]) XOR MixColumn(

    (AES_STATE[0][i] XOR 0xF0) XOR (AES_STATE[1][i]

    XOR 0x0F) )
```

However, AES_STATE[0][i] XOR 0xF0) XOR (AES_STATE[1][i] XOR 0x0F) potentially may be used to discern the Milenage_OPC value though side-channel leakage. That is avoided by masking the state using a random number.

A 16-byte temporary storage buffer, Extra_Buffer[0] 135, is initialized with a fresh random number, Step 11 and 12.

Next, the relevant portion of AES_STATE[0], i.e., the higher nibble, and the relevant portion of AES_STATE[1], i.e., the low-order nibble, are masked with the values 0xF0 and 0x0F, respectively (steps 17 and 19 in the pseudocode of Table 2 and XOR operations 141 and 143 of Figure 11). These quantities are further combined and masked with the random number stored in the first temporary storage buffer (steps 16 and 18, XOR operation 147) and placed in a second temporary storage buffer, Extra_Buffer[1]. These masking operations are performed on a byte-by-byte basis (Loop 13 in the pseudocode of Table 2, logic loop 145 of Figure 11).

In other words, after the for-loop of Steps 13 - 20, the two temporary storage buffers have the following values, for each value i in the range 0-15:

```
Extra_Buffer[0][i] = Random Number

Extra_Buffer[1][i] = Random Number XOR

(AES_STATE[0][i] XOR 0xF0) XOR (AES_STATE[1][i]

XOR 0x0F)
```

The temporary storage buffers, Extra_Buffer[0] and Extra_Buffer[1], are then also processed by the MixColumn operation (operations 149" and 149'''), steps 21 and 22.

Finally, the AES-STATE output from the MixColumn operations 149 and 149' from steps 21 and 22 of the pseudocode of Table 2 are combined with the temporary storage values having the random number and the combined AES-State values from the Loop 13 in the XOR operation 151 and stored in a return value (OUTPUT 153), steps 23 through 29 of the pseudocode of Table 2.

In the final round of AES-128, the *Shift Rows* and *Mix Columns* operations are not included. However, after many rounds, there is little risk associated with the byte substitution operation. Therefore, for the final round, the Hamming-weight neutral S-boxes may not be used.

The output from the process is identical in value to the corresponding Conventional AES-128 process.

An implementation of the process illustrated in Figures 10 and 11, and described herein above, may be implemented in software or firmware and stored as part of the cryptography module 213, illustrated in Figure 3. As such, the process for performing Hamming weight neutral S-box substitutions, for example, as part of the AES-128 cryptography in the MILENAGE algorithm, improves the integrity of a security device, e.g., a smart card or SIM card, against side-channel attacks.

Although specific embodiments of the invention have been described and illustrated, the invention is not to be limited to the specific forms or arrangements of parts so described and illustrated. For example, the MILENAGE and AES-128 algorithms are used herein for illustrative purposes. The techniques described are applicable to any cipher that uses substitution boxes including, but not limited to, other versions of the AES. The invention is limited only by the claims.

**Claims**

1. A method for operating a cryptography device, having a processor and memory, to perform a cryptography operation resistant to side-channel attack, comprising:

   using both a first and second Hamming-weight-neutral substitution box in lieu of a single standard substitution box to obtain a first and second substitution output from a byte of an encryption state wherein each substitution in the first and the second Hamming-weight-neutral substitution boxes have an equal Hamming weight and each correspond to opposite nibbles of the corresponding substitution in the standard substitution box.

2. The method for operating a cryptography device to perform a cryptography operation resistant to side-channel attack of Claim 1, further comprising:

combining the first and second substitution outputs into a combined value in a post-processing operation to obtain an output equivalent to that of a cryptographic operation performed using the standard substitution box.

3. The method for operating a cryptography device to perform a cryptography operation resistant to side-channel attack of Claim 1, wherein:

each substitution - in the standard substitution box, the first Hamming-weight-neutral substitution box, and the second Hamming-weight-neutral substitution box - comprises an upper left nibble and a lower right nibble; and the left nibble of each substitution of the first Hamming-weight-neutral substitution box is a relevant nibble equaling the left nibble of a corresponding substitution in the standard substitution box;
the right nibble of each substitution of the first Hamming-weight-neutral substitution box is a compensation nibble set such that the combined Hamming weight of the left and right nibbles of each substitution in the first Hamming-weight-neutral substitution box equals said equal Hamming weight;
the right nibble of each substitution of the second Hamming-weight-neutral substitution box is a relevant nibble equaling the right nibble of a corresponding substitution in the standard substitution box; and
the left nibble of each substitution of the second Hamming-weight-neutral substitution box is a compensation nibble set such that the combined Hamming weight of the left and right nibbles of each substitution in the second Hamming-weight-neutral substitution box equals said equal Hamming weight.

4. The method for operating a cryptography device to perform a cryptography operation resistant to side-channel attack of Claim 3, wherein the post-processing operation comprises combining the first and the second substitution outputs by masking out the compensation nibbles used to compensate for the Hamming-weight of the corresponding relevant nibble.

5. The method for operating a cryptography device to perform a cryptography operation resistant to side-channel attack of Claim 3, wherein said equal Hamming weight is four and the combined Hamming weight of said left and right nibbles of each substitution of the first Hamming-weight-neutral substitution box equal four.

6. A cryptographic device protected against side-channel attacks, comprising:

a hardware processor coupled to an instruction memory;
a memory storing a first substitution box and a second substitution box, wherein each substitution in the first substitution box and in the second substitution box has a Hamming weight equal to the Hamming weight of all other substitutions in the first and second substitution boxes, respectively; and
a cryptography module stored in the instruction memory and comprising instructions executable by the cryptographic processor to perform a byte substitution operation using said first and second substitution boxes.

7. The cryptographic device of Claim 6 wherein the cryptographic module further comprises instructions to cause the processor to combine the first and second substitution outputs into a combined value in a post-processing operation to obtain an output equivalent to that of a cryptographic operation performed using the standard substitution box.

8. The cryptographic device of Claim 6 wherein:

each substitution - in the standard substitution box, the first Hamming-weight-neutral substitution box, and the second Hamming-weight-neutral substitution box - comprises a left nibble and a right nibble; and
the left nibble of each substitution of the first Hamming-weight-neutral substitution box is a relevant nibble equaling the left nibble of a corresponding substitution in the standard substitution box;
the right nibble of each substitution of the first Hamming-weight-neutral substitution box is a compensation nibble set such that the combined Hamming weight of the left and right nibbles of each substitution in the first Hamming-weight-neutral substitution box equals said equal Hamming weight;
the right nibble of each substitution of the second Hamming-weight-neutral substitution box is a relevant nibble equaling the right nibble of a corresponding substitution in the standard substitution box; and
the left nibble of each substitution of the second Hamming-weight-neutral substitution box is a compensation nibble set such that the combined Hamming weight of the left and right nibbles of each substitution in the second Hamming-weight-neutral substitution box equals said equal Hamming weight.

9. The cryptographic device of Claim 8, wherein the post-processing operation comprises combining the first and the second substitution outputs by masking out the compensation nibbles used to compensate for the Hamming-weight of the corresponding relevant nibble.

10. The cryptographic device of Claim 8, wherein said equal Hamming weight is four and the combined Hamming weight of said left and right nibbles of each substitution of the first Hamming-weight-neutral substitution box equal four.

*Fig. 1*

*Fig. 2*

MEMORY
(ROM 204 or NVM 205)

PROGRAMS

| | |
|---|---|
| CRYPTOGRAPHY MODULE | OS |
| USER AUTHENTICATION MODULE | COMMUNICATIONS MODULE |

213

215

219

217

301

SHARED SECRET KEY 210

PRIVATE KEY (DP, P) 209

*Fig. 3*

Crypto Module

\*\*\*

CryptoFunction ( M )

{

  Initial Round

  For i = 1 to 9:

    Round Function *F*

      Byte Substitution
      Shift Row
      Mix Column
      Round Key Addition

401

  Final Round

  Return (S)

}

\*\*\*

<u>213</u>

*Fig. 4*

*Fig. 5*

601

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | 63 | 7C | 77 | 7B | F2 | 6B | 6F | C5 | 30 | 1 | 67 | 2B | FE | D7 | AB | 76 |
| 1 | CA | 82 | C9 | 7D | FA | 59 | 47 | F0 | AD | D4 | A2 | AF | 9C | A4 | 72 | C0 |
| 2 | B7 | FD | 93 | 26 | 36 | 3F | F7 | CC | 34 | A5 | E5 | F1 | 71 | D8 | 31 | 15 |
| 3 | 4 | C7 | 23 | C3 | 18 | 96 | 5 | 9A | 7 | 12 | 80 | E2 | EB | 27 | B2 | 75 |
| 4 | 9 | 83 | 2C | 1A | 1B | 6E | 5A | A0 | 52 | 3B | D6 | B3 | 29 | E3 | 2F | 84 |
| 5 | 53 | D1 | 0 | ED | 20 | FC | B1 | 5B | 6A | CB | BE | 39 | 4A | 4C | 58 | CF |
| 6 | D0 | EF | AA | FB | 43 | 4D | 33 | 85 | 45 | F9 | 2 | 7F | 50 | 3C | 9F | A8 |
| 7 | 51 | A3 | 40 | 8F | 92 | 9D | 38 | F5 | BC | B6 | DA | 21 | 10 | FF | F3 | D2 |
| 8 | CD | 0C | 13 | EC | 5F | 97 | 44 | 17 | C4 | A7 | 7E | 3D | 64 | 5D | 19 | 73 |
| 9 | 60 | 81 | 4F | DC | 22 | 2A | 90 | 88 | 46 | EE | B8 | 14 | DE | 5E | 0B | DB |
| A | E0 | 32 | 3A | 0A | 49 | 6 | 24 | 5C | C2 | D3 | AC | 62 | 91 | 95 | E4 | 79 |
| B | E7 | C8 | 37 | 6D | 8D | D5 | 4E | A9 | 6C | 56 | F4 | EA | 65 | 7A | AE | 8 |
| C | BA | 78 | 25 | 2E | 1C | A6 | B4 | C6 | E8 | DD | 74 | 1F | 4B | BD | 8B | 8A |
| D | 70 | 3E | B5 | 66 | 48 | 3 | F6 | 0E | 61 | 35 | 57 | B9 | 86 | C1 | 1D | 9E |
| E | E1 | F8 | 98 | 11 | 69 | D9 | 8E | 94 | 9B | 1E | 87 | E9 | CE | 55 | 28 | DF |
| F | 8C | A1 | 89 | 0D | BF | E6 | 42 | 68 | 41 | 99 | 2D | 0F | B0 | 54 | BB | 16 |

*Fig. 6*

701 — Set *DesiredHammingWeight*

703 —

For each entry *i,j* in S-Box having a *UpperNibble* and a *LowerNibble*:

*CompensationValue* = *DesiredHammingWeight* - Hamming_Weight (*LowerNibble*)
705

*UpperNibble* = Select a *nibble having HammingWeight equal to CompensationValue*
707

*SBox_0* [i,j] = *LowerNibbleCompensation* // *LowerNibble from S-Box[i,j]*
709

*CompensationValue* = *DesiredHammingWeight* - Hamming_Weight (*UpperNibble*)
711

*LowerNibble* = Select a *nibble having HammingWeight equal to CompensationValue*
713

*SBox_1* [i,j] = *UpperNibble* from S-Box[i,j] // *LowerNibble*
715

## Fig. 7

```
                          ┌──────────  Crypto Module  ──────────┐
                          │   ***                                │
                          │                                      │
                          │  CryptoFunction ( M )                │
                          │                                      │
                          │  {                                   │
                          │                                      │
                          │    Initial Round                     │
                          │                                      │
                          │    For i = 1 to 9:                   │
                          │    ┌ ─ ─ ─ ─ ─ ─ ─ ─ ─ ─ ─ ─ ─ ─ ┐  │
                          │      Round Function F'                  ─────── 801
                          │    │                              │  │
                          │        Byte Substitution w/ Split S-box
                          │    │   Shift Row                  │  │
                          │        Mix Column
                          │    │   Round Key Addition         │  │
                          │    └ ─ ─ ─ ─ ─ ─ ─ ─ ─ ─ ─ ─ ─ ─ ┘  │
                          │                                      │
                          │    Final Round                       │
                          │                                      │
                          │    Return (S)                        │
                          │                                      │
                          │  }                                   │
                          │                                      │
                          │   ***                                │
                          │                            213'      │
                          └──────────────────────────────────────┘
```

*Fig. 8*

SBox_0:

901

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | C3 | 3C | 87 | 4B | D2 | 4B | F | A5 | F0 | E1 | 87 | 4B | 1E | 87 | 4B | 96 |
| 1 | 5A | D2 | 69 | 2D | 5A | 69 | 87 | F0 | 2D | B4 | D2 | F | 3C | B4 | D2 | F0 |
| 2 | 87 | 2D | C3 | 96 | 96 | F | 87 | 3C | B4 | A5 | A5 | E1 | E1 | 78 | E1 | A5 |
| 3 | B4 | 87 | C3 | C3 | 78 | 96 | A5 | 5A | 87 | D2 | F0 | D2 | 4B | 87 | D2 | A5 |
| 4 | 69 | C3 | 3C | 5A | 4B | 1E | 5A | F0 | D2 | 4B | 96 | C3 | 69 | C3 | F | B4 |
| 5 | C3 | E1 | F0 | 2D | F0 | 3C | E1 | 4B | 5A | 4B | 1E | 69 | 5A | 3C | 78 | F |
| 6 | F0 | F | 5A | 4B | C3 | 2D | C3 | A5 | A5 | 69 | D2 | F | F0 | 3C | F | 78 |
| 7 | E1 | C3 | F0 | F | D2 | 2D | 78 | A5 | 3C | 96 | 5A | E1 | F0 | F | C3 | D2 |
| 8 | 2D | 3C | C3 | 3C | F | 87 | B4 | 87 | B4 | 87 | 1E | 2D | B4 | 2D | 69 | C3 |
| 9 | F0 | E1 | F | 3C | D2 | 5A | F0 | 78 | 96 | 1E | 78 | B4 | 1E | 1E | 4B | 4B |
| A | F0 | D2 | 5A | 5A | 69 | 96 | B4 | 3C | D2 | C3 | 3C | D2 | E1 | A5 | B4 | 69 |
| B | 87 | 78 | 87 | 2D | 2D | A5 | 1E | 69 | 3C | 96 | B4 | 5A | A5 | 5A | 1E | 78 |
| C | 5A | 78 | A5 | 1E | 3C | 96 | B4 | 96 | 78 | 2D | B4 | F | 4B | 2D | 4B | 5A |
| D | F0 | 1E | A5 | 96 | 78 | C3 | 96 | 1E | E1 | A5 | 87 | 69 | 96 | E1 | 2D | 1E |
| E | E1 | 78 | 78 | E1 | 69 | 69 | 1E | B4 | 4B | 1E | 87 | 69 | 1E | A5 | 78 | F |
| F | 3C | E1 | 69 | 2D | F | 96 | D2 | 78 | E1 | 69 | 2D | F | F0 | B4 | 4B | 96 |

903    SBox_1:

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | 69 | 78 | 78 | 78 | F0 | 69 | 69 | C3 | 3C | F | 69 | 2D | F0 | D2 | A5 | 78 |
| 1 | C3 | 87 | C3 | 78 | F0 | 5A | 4B | F0 | A5 | D2 | A5 | A5 | 96 | A5 | 78 | C3 |
| 2 | B4 | F0 | 96 | 2D | 3C | 3C | F0 | C3 | 3C | A5 | E1 | F0 | 78 | D2 | 3C | 1E |
| 3 | F | C3 | 2D | C3 | 1E | 96 | F | 96 | F | 1E | 87 | E1 | E1 | 2D | B4 | 78 |
| 4 | F | 87 | 2D | 1E | 1E | 69 | 5A | A5 | 5A | 3C | D2 | B4 | 2D | E1 | 2D | 87 |
| 5 | 5A | D2 | F | E1 | 2D | F0 | B4 | 5A | 69 | C3 | B4 | 3C | 4B | 4B | 5A | C3 |
| 6 | D2 | E1 | A5 | F0 | 4B | 4B | 3C | 87 | 4B | F0 | F | 78 | 5A | 3C | 96 | A5 |
| 7 | 5A | A5 | 4B | 87 | 96 | 96 | 3C | F0 | B4 | B4 | D2 | 2D | 1E | F0 | F0 | D2 |
| 8 | C3 | F | 1E | E1 | 5A | 96 | 4B | 1E | C3 | A5 | 78 | 3C | 69 | 5A | 1E | 78 |
| 9 | 69 | 87 | 4B | D2 | 2D | 2D | 96 | 87 | 4B | E1 | B4 | 1E | D2 | 5A | F | D2 |
| A | E1 | 3C | 3C | F | 4B | F | 2D | 5A | C3 | D2 | A5 | 69 | 96 | 96 | E1 | 78 |
| B | E1 | C3 | 3C | 69 | 87 | D2 | 4B | A5 | 69 | 5A | F0 | E1 | 69 | 78 | A5 | F |
| C | B4 | 78 | 2D | 2D | 1E | A5 | B4 | C3 | E1 | D2 | 78 | 1E | 4B | B4 | 87 | 87 |
| D | 78 | 3C | B4 | 69 | 4B | F | F0 | F | 69 | 3C | 5A | B4 | 87 | C3 | 1E | 96 |
| E | E1 | F0 | 96 | 1E | 69 | D2 | 87 | 96 | 96 | 1E | 87 | E1 | C3 | 5A | 2D | D2 |
| F | 87 | A5 | 87 | F | B4 | E1 | 4B | 69 | 4B | 96 | 2D | F | B4 | 5A | B4 | 1E |

*Fig. 9*

*Fig. 10*

*Fig. 11*

Europäisches
Patentamt

European
Patent Office

Office européen
des brevets

# EUROPEAN SEARCH REPORT

Application Number

EP 16 30 5719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2015/270950 A1 (MICHIELS WIL [NL] ET AL) 24 September 2015 (2015-09-24)<br>* abstract *<br>* paragraph [0062] - paragraph [0063] *<br>* paragraph [0081] - paragraph [0092] *<br>----- | 1-10 | INV.<br>H04L9/00 |
| Y | US 2004/078588 A1 (CHOW STANLEY T [CA] ET AL) 22 April 2004 (2004-04-22)<br>* paragraph [0012] - paragraph [0018] *<br>* paragraph [0082] *<br>* paragraph [0087] - paragraph [0093] *<br>* paragraph [0114] *<br>* paragraph [0156] - paragraph [0178] *<br>* paragraph [0232] - paragraph [0252] *<br>----- | 1-10 | |
| A | US 6 940 975 B1 (KAWAMURA SHINICHI [JP] ET AL) 6 September 2005 (2005-09-06)<br>* column 8, line 50 - column 11, line 10 *<br>----- | 1-10 | |

TECHNICAL FIELDS
SEARCHED (IPC)

H04L

The present search report has been drawn up for all claims

| Place of search | Date of completion of the search | Examiner |
|---|---|---|
| Munich | 23 November 2016 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 16 30 5719

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2016

| Patent document cited in search report | | | Publication date | Patent family member(s) | | | Publication date |
|---|---|---|---|---|---|---|---|
| US 2015270950 | A1 | | 24-09-2015 | CN | 105049400 | A | 11-11-2015 |
| | | | | EP | 2924677 | A1 | 30-09-2015 |
| | | | | US | 2015270950 | A1 | 24-09-2015 |
| US 2004078588 | A1 | | 22-04-2004 | AU | 3527901 | A | 27-08-2001 |
| | | | | AU | 3528001 | A | 27-08-2001 |
| | | | | AU | 3528101 | A | 27-08-2001 |
| | | | | CA | 2298990 | A1 | 18-08-2001 |
| | | | | EP | 1256201 | A2 | 13-11-2002 |
| | | | | EP | 1256202 | A2 | 13-11-2002 |
| | | | | EP | 1256203 | A2 | 13-11-2002 |
| | | | | US | 2004025032 | A1 | 05-02-2004 |
| | | | | US | 2004030905 | A1 | 12-02-2004 |
| | | | | US | 2004078588 | A1 | 22-04-2004 |
| | | | | WO | 0161914 | A2 | 23-08-2001 |
| | | | | WO | 0161915 | A2 | 23-08-2001 |
| | | | | WO | 0161916 | A2 | 23-08-2001 |
| US 6940975 | B1 | | 06-09-2005 | DE | 69936024 | T2 | 10-01-2008 |
| | | | | EP | 0981223 | A2 | 23-02-2000 |
| | | | | JP | 3600454 | B2 | 15-12-2004 |
| | | | | JP | 2000066585 | A | 03-03-2000 |
| | | | | US | 6940975 | B1 | 06-09-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Cryptographic Hardware and Embedded Systems - CHES 2001. Lecture Notes in Computer Science. Springer, 2001, vol. 2162, 309-318
- Multiplicative Masking and Power Analysis of AES. **JOVAN D. GOLIC ; CHRISTOPHE TYMEN.** Cryptographic Hardware and Embedded Systems - CHES 2002, volume 2535 of Lecture Notes in Computer Science. Springer, 2003, 198-212

- **ELISABETH OSWALD ; STEFAN MANGARD ; NORBERT PRAMSTALLER.** Secure and Efficient Masking of AES - A Mission Impossible. *Cryptology ePrint Archive,* 2004, http://epunt.iacr.org
- *3GPP TS 35.205,* January 2016
- *Algorithm specification (Release 13),* 15 May 2016, http://www.etsi.org/deliver/etsi_ts/135200_135299/135206/13.00.00_60/ts_135206v 130000p.pdf